# EUROPEAN PATENT APPLICATION

(11) **EP 2 574 392 A1**
(43) Date of publication of application: **03.04.2013**
(21) Application number: 12185987.0
(22) Date of filing: 25.09.2012
(51) Int. Cl.: B01D 53/00, B01D 5/00, B01D 53/62, F25J 1/00, F25J 3/06

(54) **Systems and Methods for Producing Solid or Liquid Carbon Dioxide and for Energy Recovery**

(30) Priority: 29.09.2011 US 201113248692
(71) Applicant: General Electric Company, Schenectady, NY 12345 (US)
(72) Inventor: Lissianski, Vitali Victor, Niskayuna, NY New York 12309 (US); Hudy, Laura Michele, Niskayuna, NY New York 12309 (US)
(74) Representative: Cleary, Fidelma

(57) **Abstract**

A system for producing at least one of solid or liquid carbon dioxide includes a combustor (100) configured to produce an exhaust gas containing carbon dioxide, a compressor (104) configured to compress the exhaust gas and a heat exchanger (102, 112) configured to cool the exhaust gas. An expansion chamber (108) is configured to allow the compressed exhaust gas to expand and form the solid or liquid carbon dioxide and to separate the solid or liquid carbon dioxide from a substantially CO2 depleted gas. A supply passage (130, 146) supplies the CO2 depleted gas to said heat exchanger and a storage chamber (114) stores the solid carbon dioxide.

## Description

### BACKGROUND OF THE INVENTION

The field of the present disclosure relates generally to systems and methods for providing utilities and carbon dioxide. More particularly, the present disclosure relates to systems and methods for providing electricity, heat, water, and carbon dioxide.

Carbon dioxide (CO₂) is a naturally occurring chemical compound found in the atmosphere. Carbon dioxide gas is also a by-product of combustion. Carbon dioxide contributes to plant growth by participating in photosynthesis, and is also used in many industries, such as the food and beverage industry, where carbon dioxide may be used to produce carbonated food and beverages. Carbon dioxide is also a major component in wine making, pneumatics, fire extinguishers, welding, pharmaceuticals, lasers and refrigeration, among others.

In plants, carbon dioxide contributes to plant growth by participating in photosynthesis, in which plants use carbon dioxide, water and light to produce sugar and release oxygen. Although carbon dioxide is one of the three main components (CO₂, water and light) necessary for photosynthesis, the amount of carbon dioxide in air is only approximately 0.039% (the amount may fluctuate by season). The other constituents of air include approximately 78% nitrogen, 21 % oxygen and trace gases. Carbon dioxide concentrations higher than those found in air may promote a significant increase in plant growth.

Some plants are grown in a greenhouse, which is typically a structure having light transmitting walls that allow sunlight or other light to enter the structure. Greenhouses also store thermal energy, and tend to have increased internal temperatures as compared to the ambient external temperature. Greenhouses also require water and electricity (e.g., to provide lighting and air conditioning) to function, for example, to supply to plants within the greenhouse.

### BRIEF DESCRIPTION OF THE INVENTION

In one aspect of the invention, a system for producing at least one of solid or liquid carbon dioxide includes a combustor configured to produce an exhaust gas containing carbon dioxide, a compressor configured to compress the exhaust gas, and a heat exchanger configured to cool the exhaust gas. The system also includes an expansion chamber configured to allow the compressed exhaust gas to expand and form the solid or liquid carbon dioxide and separate the solid or liquid carbon dioxide from a substantially CO2 depleted gas. A supply passage is configured to supply the CO2 depleted gas to said heat exchanger and a storage chamber is configured to store the solid carbon dioxide.

In another aspect of the invention, a method for producing at least one of solid or liquid carbon dioxide includes combusting a fuel to produce an exhaust gas containing carbon dioxide, compressing the exhaust gas in a compressor, and cooling the exhaust gas in a heat exchanger. The method further includes expanding the exhaust gas to produce the solid or liquid carbon dioxide and separating the CO2 depleted gas from a substantially CO2 depleted gas, supplying at least a portion of the CO2 depleted gas to the heat exchanger, and storing the solid or liquid carbon dioxide in a storage container.

In yet another aspect of the invention, a method of supplying carbon dioxide gas to a greenhouse includes combusting a fuel to produce an exhaust gas containing carbon dioxide, compressing the exhaust gas in a compressor, and cooling the exhaust gas in a heat exchanger. The method further includes expanding the exhaust gas to produce at least one of solid or liquid carbon dioxide and separating the solid or liquid carbon dioxide from a substantially CO2 depleted gas, supplying at least a portion of the CO2 depleted gas to said heat exchanger, and storing at least a portion of the solid or liquid carbon dioxide in a storage container. At least a portion of the solid or liquid carbon dioxide is warmed to create carbon dioxide gas, and the carbon dioxide gas is supplied to the greenhouse.

### BRIEF DESCRIPTION OF THE DRAWINGS

Embodiments of the present invention will now be described, by way of example only, with reference to the accompanying drawings in which:

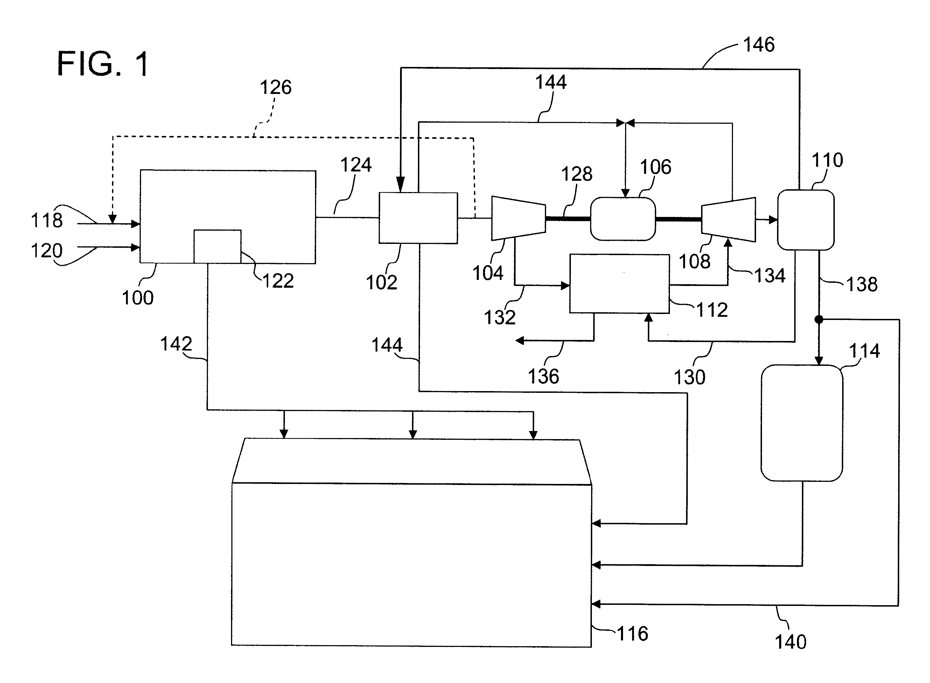

Figure 1 is a block diagram of a system for producing solid carbon dioxide according to the present disclosure.

### DETAILED DESCRIPTION OF THE INVENTION

Described herein are systems and methods for producing utilities, such as water, heat, electricity, and carbon dioxide, which may be solid carbon dioxide, liquid carbon dioxide or gaseous carbon dioxide.

Fig. 1 is a block diagram of an exemplary system for producing carbon dioxide. In some embodiments, the system comprises a combustor 100, a cooling device 102, a compressor 104, a motor 106, a gas expansion device 108, a solid carbon dioxide separating chamber 110, a heat exchanger 112, a carbon dioxide storage chamber 114, and a building 116.

In one embodiment combustor 100 is, for example, an internal combustion engine such as a gasoline, diesel, natural gas or any other engine or device that uses a fuel and produces an exhaust gas containing carbon dioxide. Combustor 100 is connected to a fuel supply line 118 and an air supply line 120.

In one embodiment, combustor 100 is provided with a generator 122 that generates an electrical power, such as an alternating current (AC) or a direct current (DC) electrical power. Generator 122 is driven by a mechanical or other force produced by combustor 100, capable of causing generator 122 to produce electrical power. In another embodiment, generator 122 is an alternator driven by a rotational motion produced by the combustor 100.

In one embodiment, exhaust gas from combustor 100 is transported via pipe 124 to a compressor 104. The exhaust gas from combustor 100 has a temperature of approximately 350°C to 450°C; however, the temperature of the exhaust gas depends upon the type of combustor being used and thus may be greater than or less than 350°C to 450°C. The exhaust gas from combustor 100 contains at least some carbon dioxide gas, and also may contain other gases. In some embodiments, the exhaust gas contains twelve percent oxygen and five percent carbon dioxide.

In one embodiment, cooling device 102 is a waste heat recovery system (WHR). In other embodiments, cooling device 102 is gas/gas or a gas/liquid heat exchanger. In yet another embodiment, cooling device 102 is an organic Rankin cycle (ORC) system.

In one embodiment, to increase the amount of carbon dioxide in the exhaust gas, an exhaust gas recirculation route 126 is connected between combustor 100 and compressor 104. Exhaust gas recirculation route 126 captures at least a portion of the exhaust gas, for example, 20%-50% of the exhaust gas, and recirculates the portion of the exhaust gas to air supply line 120 of combustor 100. The recirculated exhaust gas is further combusted in combustor 100, thus allowing for the exhaust gas of combustor 100 to achieve an increase in carbon dioxide concentration. In one embodiment, the exhaust gas after recirculation, has a carbon dioxide concentration of approximately six percent to seven percent. However, the carbon dioxide concentration may be any percentage that allows the system to function according to the present disclosure.

In one embodiment, a membrane system is used to separate at least some of the carbon dioxide from the exhaust gas. In some embodiments, the concentration of carbon dioxide in the separated stream is in the range of 60% to 90%. In another embodiment, the separated stream is sent to compressor 104 while a remainder of the exhaust gas is vented out of the system, for example to the atmosphere.

Compressor 104 receives exhaust gas from combustor 100 and compresses the exhaust gas. In one embodiment, the exhaust gas is compressed in compressor 104 to approximately 4 to 6 bar. The exhaust gas, by undergoing the compression, may rise in temperature. In one embodiment, the temperature of the exhaust gas increases to 200 °C. In one embodiment, compressor 104 is driven by motor 106, or driven by a mechanical force produced by combustor 100. In another embodiment, motor 70 connects to compressor 104 by a driveshaft 128 that drives compressor 104.

The compressed exhaust gas leaving compressor 104 is then cooled in heat exchanger 112 and sent to gas expansion device 108 that allows the exhaust gas to expand. In some embodiments, gas expansion device 108 is a turbine expansion device. Expansion of the gas in gas expansion device 108 expands and cools the exhaust gas. In one embodiment, the exhaust gas is cooled to an extent that at least part of carbon dioxide is converted to a solid state and separated from other gases in the exhaust gas. For example, the exhaust gas is cooled to an extent necessary to separate all or substantially all of the carbon dioxide from the other gases in the exhaust gas. In one embodiment, ninety percent of the carbon dioxide is separated from the exhaust gas at a temperature of approximately -120°C to -125°C. In other embodiments, the temperature to which the exhaust gas is cooled depends on a concentration of carbon dioxide in the exhaust gas entering the gas expansion device 108 or a desired separation amount of carbon dioxide.

In one embodiment, a separate stream of carbon dioxide depleted gas 130 and 146 is provided from separating chamber 110. The carbon dioxide depleted gas 130 and 146 exiting the separating chamber 110 is cold. In one embodiment, the temperature of the carbon dioxide depleted gas is in the range from -120 °C to -125 °C. In one embodiment, cold carbon dioxide depleted gas 146 exiting the separating chamber 110 is supplied to cooling system 102 to pre-cool the exhaust gas before entering compressor 104. In another embodiment, the cold carbon dioxide depleted gas 130 is provided to heat exchanger 112, which utilizes the cold carbon dioxide depleted gas 130 to pre-cool compressed exhaust gas 132 exiting compressor 104. In one embodiment, the temperature of the compressed gas after pre-cooling is -95 °C. When the cold carbon dioxide depleted gas passes through heat exchanger 112, it absorbs heat from the compressed exhaust gas 132. The pre-cooled exhaust gas 134 then flows to gas expansion device 108 to be expanded. Warm carbon dioxide depleted gas 136 exits heat exchanger 112 and is stored, exhausted or recycled.

In one embodiment, carbon dioxide 138, which may be a solid, liquid or gas, is provided from gas separator 110 to a storage chamber 114. In another embodiment, carbon dioxide 138 is stored in storage chamber in solid form, wherein storage chamber 114 is maintained at a temperature of approximately -56 °C to substantially or completely avoid carbon dioxide sublimation. In yet another embodiment, carbon dioxide 138 is stored in storage chamber 114 at a sufficient temperature to maintain the carbon dioxide 138 at a particular temperature.

In one embodiment, the carbon dioxide is sent from storage chamber 114 to a building 116, such as a greenhouse or drink carbonization plant. In another embodiment, carbon dioxide 138 is warmed by a heating device (not shown) to a temperature greater than -56 °C before being sent to building 116. In yet other embodiments, carbon dioxide is sent directly to building 116 via bypass pipe 140 that bypasses storage chamber 114. The carbon dioxide sent to building 116 is used, for example, to increase the concentration of carbon dioxide gas in building 116 (e.g., in a greenhouse), or is sent to secondary storage tanks (not shown) located at building 116 for use in food and/or beverage products. In one embodiment, building 116 is a greenhouse, and the carbon dioxide gas increases the carbon dioxide concentration in the greenhouse to contribute to plant growth. In another embodiment, the carbon dioxide undergoes a purification process before being sent to storage chamber 114 or building 116. For example, gas separator 110 includes a carbon dioxide purification device, or scrubber, that purifies the carbon dioxide.

In one embodiment, utilities are provided to building 116 or other structures and combustor 100 is connected to generator 122, which generates electrical power. The generated electrical power from generator 122 is sent via connection 142 to building 116, for example, to power lighting and air conditioning units and the like.

In one embodiment, utilities are provided to building 116 or other structures and combustor In another embodiment, cooling system 102 is a WHR system and produces moisture (e.g., condensation) as a byproduct of the waste heat recovery. The moisture is transported via channel 144 to building 116 for use therein, for example, for watering plants, humidifying the air and the like. In another embodiment, the moisture undergoes a purification process before being transported to building 116. In still another embodiment, WHR system 102 produces electricity 144 that is used to power motor 106 or other electrical devices of the system. In another embodiment, a portion of the cold carbon dioxide depleted gas 130 is used to cool building 116, for example by being used in an air conditioning system.

The technical effects of the systems and methods of the present disclosure provide the ability to generate utilities, such as water, heat, electricity, and carbon dioxide, which may be solid carbon dioxide, liquid carbon dioxide or gaseous carbon dioxide.

In some embodiments, the above described systems and methods are electronically or computer controlled. The embodiments described herein are not limited to any particular system controller or processor for performing the processing tasks described herein. The term controller or processor, as used herein, is intended to denote any machine capable of performing the calculations, or computations, necessary to perform the tasks described herein. The terms controller and processor also are intended to denote any machine capable of accepting a structured input and of processing the input in accordance with prescribed rules to produce an output. It should also be noted that the phrase "configured to" as used herein means that the controller/processor is equipped with a combination of hardware and software for performing the tasks of embodiments of the invention, as will be understood by those skilled in the art. The term controller/processor, as used herein, refers to central processing units, microprocessors, microcontrollers, reduced instruction set circuits (RISC), application specific integrated circuits (ASIC), logic circuits, and any other circuit or processor capable of executing the functions described herein.

The embodiments described herein embrace one or more computer readable media, including non-transitory computer readable storage media, wherein each medium may be configured to include or includes thereon data or computer executable instructions for manipulating data. The computer executable instructions include data structures, objects, programs, routines, or other program modules that may be accessed by a processing system, such as one associated with a general-purpose computer capable of performing various different functions or one associated with a special-purpose computer capable of performing a limited number of functions. Aspects of the disclosure transform a general-purpose computer into a special-purpose computing device when configured to execute the instructions described herein. Computer executable instructions cause the processing system to perform a particular function or group of functions and are examples of program code means for implementing steps for methods disclosed herein. Furthermore, a particular sequence of the executable instructions provides an example of corresponding acts that may be used to implement such steps. Examples of computer readable media include random-access memory ("RAM"), read-only memory ("ROM"), programmable read-only memory ("PROM"), erasable programmable read-only memory ("EPROM"), electrically erasable programmable read-only memory ("EEPROM"), compact disk read-only memory ("CD-ROM"), or any other device or component that is capable of providing data or executable instructions that may be accessed by a processing system.

A computer or computing device such as described herein has one or more processors or processing units, system memory, and some form of computer readable media. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. Communication media typically embody computer readable instructions, data structures, program modules, or other data in a modulated data signal such as a carrier wave or other transport mechanism and include any information delivery media. Combinations of any of the above are also included within the scope of computer readable media.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A method of supplying carbon dioxide gas to a greenhouse, said method comprising:
   combusting a fuel to produce an exhaust gas containing carbon dioxide;
   compressing the exhaust gas in a compressor;
   cooling the exhaust gas in a heat exchanger;
   expanding the exhaust gas to produce at least one of solid or liquid carbon dioxide and separating the solid or liquid carbon dioxide from a substantially CO₂ depleted gas;
   supplying at least a portion of the CO₂ depleted gas to said heat exchanger;
      storing at least a portion of the solid or liquid carbon dioxide in a storage container; warming at least a portion of the solid or liquid carbon dioxide to create carbon dioxide gas; and
   supplying the carbon dioxide gas to the greenhouse.
2. A method according to Clause 1, wherein the heat exchanger is a waste heat recovery (WHR) system configured to utilize the exhaust gas to produce electricity, water and a pre-cooled stream of the exhaust gas, and the method further comprises supplying the pre-cooled stream of exhaust gas to the compressor.
3. A method according to Clause 1, further comprising reducing a temperature of the compressed exhaust gas in a second heat exchanger provided downstream of said compressor, and providing the reduced temperature exhaust gas to said turbine.
4. A method according to Clause 3, further comprising supplying electricity generated by the WHR system to a motor that powers at least one of the compressor and the turbine.

## Claims

1. A system for producing at least one of solid or liquid carbon dioxide, said system comprising:
a combustor (100) configured to produce an exhaust gas containing carbon dioxide;
a compressor (104) configured to compress the exhaust gas;
a heat exchanger (102, 112) configured to cool the exhaust gas;
an expansion chamber (108) configured to allow the compressed exhaust gas to expand and form the solid or liquid carbon dioxide and to separate the solid or liquid carbon dioxide from a substantially CO₂ depleted gas;
a supply passage (130, 146) configured to supply the CO₂ depleted gas to said heat exchanger (102,112); and
a storage chamber (114) configured to store the solid or liquid carbon dioxide.

2. A system according to Claim 1, wherein said heat exchanger (102) is provided upstream of said compressor (104), said heat exchanger configured to produce water and provide a pre-cooled stream of the exhaust gas to said compressor.

3. A system according to Claim 2, wherein the heat exchanger (102) is configured to utilize the supplied CO₂ depleted gas to pre-cool the exhaust gas prior to the exhaust gas entering the compressor.

4. A system according to Claim 2, wherein the heat exchanger (102) comprises a waste heat recovery (WHR) system, said WHR system configured to utilize the exhaust gas to produce electricity and the water, and provide the pre-cooled stream of the exhaust gas to said compressor (104).

5. A system according to Claim 4, further comprising an electric motor (106) configured to rotate said compressor (104), and said electric motor is electrically connected to an electrical output of said WHR system (102).

6. A system according to any of Claims 2 to 5, further comprising a second heat exchanger (112) provided downstream of said compressor (104), said second heat exchanger configured to reduce a temperature of the compressed exhaust gas and provide the reduced temperature exhaust gas to said turbine (108).

7. A system according to Claim 6, further comprising a duct (130) for supplying the CO₂ depleted gas to said second heat exchanger (112), said second heat exchanger configured to use the CO₂ depleted gas to further cool the reduced temperature exhaust gas.

8. A system according to any preceding Claim, further comprising a duct connected between said storage chamber (114) and a building (116) for supplying carbon dioxide from said storage chamber to the building.

9. A system according to Claim 8, further comprising a second duct (140) located upstream of said storage chamber (114) and connected to the building, said second duct configured to supply carbon dioxide to the building (116) and bypass said storage chamber.

10. A system according to any preceding Claim, further comprising:
an electrical generator (122) connected to said combustor (100), said electrical generator configured to generate electricity based upon an operation of said combustor, and
an electrical supply line (142) configured to supply electricity from said generator to at least one other component (116) of said system.

11. A method for producing at least one of solid or liquid carbon dioxide, said method comprising:
combusting a fuel to produce an exhaust gas containing carbon dioxide;
compressing the exhaust gas in a compressor (104);
cooling the exhaust gas in a heat exchanger (102,112);
expanding the exhaust gas to produce the solid or liquid carbon dioxide and separating the solid or liquid carbon dioxide from a substantially CO₂ depleted gas;
supplying at least a portion of the CO₂ depleted gas to the heat exchanger (102,112); and
storing the solid or liquid carbon dioxide in a storage container (114).

12. A method according to Claim 11, wherein the heat exchanger (1102,112) is a waste heat recovery (WHR) system (102) configured to utilize the exhaust gas to produce electricity, water and a pre-cooled stream of the exhaust gas, and the method further comprises supplying the pre-cooled stream of exhaust gas to the compressor.

13. A method of producing solid carbon dioxide according to Claim 11 or 12, further comprising:
reducing a temperature of the compressed exhaust gas in a second heat exchanger (112) provided downstream of the compressor (104),
providing the reduced temperature exhaust gas to a turbine.

14. A method of producing solid carbon dioxide according to Claim 12, further comprising supplying electricity generated by the WHR system (102) to a motor (106) that powers at least one of the compressor (104) and a turbine.

15. A method according to Claim 13, further comprising supplying the substantially CO₂ depleted gas to the heat exchanger to further reduce the temperature of the exhaust gas.

16. A method according to any of Claims 12 to 15, further comprising supplying the water generated from the WHR system to a building.

17. A method according to any of Claims 11 to 16, further comprising increasing the concentration of carbon dioxide gas in a building using at least a portion of the solid or liquid carbon dioxide from the storage container.
